# EUROPEAN PATENT SPECIFICATION

(11) **EP 3 134 807 B1**
(45) Date of publication and mention of the grant of the patent: **05.08.2020**
(21) Application number: 15721431.3
(22) Date of filing: 22.04.2015
(51) Int. Cl.: G06F 9/451, G06F 3/0485, G06F 3/0481

(54) **PRE-FETCHING GRID BLOCKS BY USER INTENT**
VORÄTZUNG VON GITTERBLÖCKEN DURCH BENUTZERVERSUCH
PRÉ-EXTRACTION DE BLOCS DE GRILLE PAR INTENTION D'UTILISATEUR

(30) Priority: 25.04.2014 US 201414262001
(43) Date of publication of application: 01.03.2017
(73) Proprietor: Microsoft Technology Licensing, LLC, Redmond, WA 98052-6399 (US)
(72) Inventor: VALEY, Anthony A., Redmond, Washington 98052-6399 (US); MICHAELI, Guy G., Redmond, Washington 98052-6399 (US); JANNI, Daniel J., Redmond, Washington 98052-6399 (US); BROTHERS, Scott D., Redmond, Washington 98052-6399 (US)
(74) Representative: Grünecker Patent- und Rechtsanwälte PartG mbB
(86) International application number: PCT/US2015/026967
(87) International publication number: WO 2015/164440

(56) References cited:
- WO-A1-2005/003967
- US-A1- 2005 071 777
- US-A1- 2013 173 513
- US-A1- 2014 059 156
- US-B1- 6 567 838

## Description

### TECHNICAL FIELD

Aspects of the disclosure are related to computing hardware and software technology, and in particular, to enhanced user experiences with online services.

### TECHNICAL BACKGROUND

WO 2005/003967 A1 discloses a predictive graphical user interface (GUI) with speculative execution, comprising a method with predicting a next user input to the GUI; pending receipt of the next user input, executing a preparation portion of GUI code that provides the GUI function required by the predicted user input; and determining whether the predicted user input corresponds to the actual next user input and, on a positive determination, processing an activation portion of said GUI code to complete the required GUI function.

US 2013/0173513 A1 discloses a context-based device action prediction comprising a method with obtaining one or more contextual values from one or more contextors; deciding, using a decision engine comprising one or more decision rules, whether to perform an action on a computing device based on the one or more contextual values and the one or more decision rules; performing the action on the computing device in an instance when the decision engine decides that the action is to be performed; and updating the decision rules of the decision engine using feedback related to the action.

US 2014/0059156 A1 discloses a predictive caching for content. If a user is likely to commence use of a content item through a client, and if the client has available resources to facilitate instantaneous use, the client is configured to predictively cache the content item before the user commences use. In doing so, the client may obtain metadata for the content item from a server. The client may then initialize various resources to facilitate instantaneous use of the content item by the client based at least in part on the metadata.

Online content services are increasingly popular ways among individuals, enterprises, and organizations alike for accessing and interacting with content. Sometimes colloquially referred to as "cloud" services, online services allow users to produce and consume a wide variety of content from anywhere, and using almost any type of device. Examples of such online services include Microsoft® Office 365® and Google® Docs.

Many cloud services are experienced by users through user interfaces generated locally by client applications running on end-user devices and sometimes within the context of web browsers. The client applications interface with the cloud services to download data for the users' consumption and upload data that may reflect changes or other interactions made by the users.

The nature of cloud-based services is such that bandwidth between the cloud and end user devices can be limited. As such, local models of content items are usually representative of less than a full version of the items. For example, a local model of a spreadsheet may include only a fraction of all of the data that makes up the spreadsheet so as to conserve bandwidth and other processing resources.

This technique can lead to sub-optimal user experiences when a user navigates within a user interface to a portion of a content item that has not yet been downloaded from the cloud. The client application must retrieve the associated data and load it into the local model of the content item, causing a time lag between the user's navigation and the presentation of the data in the user interface.

One solution to this problem involves pre-fetching data such that the data is downloaded from a service for rendering in a local model of a spreadsheet before that data is actually needed. Data can be pre-fetched based on how fast a user is scrolling down through a spreadsheet, for example. It can be inferred from the scrolling behavior that the user's intent is to view cells far down in the spreadsheet. As such, a data block or blocks associated with those cells can be pre-fetched such that they are available as the user scrolls to them, thus providing the user with a fast and graceful user experience.

### OVERVIEW

Provided herein are systems, methods, and software to enhance the user experience with online services and hosted content. Data may be pre-loaded in local models of hosted content in anticipation of user interactions that are predicted occur. Download delays and other sub-optimal aspects may thus be mitigated or avoided. The invention refers to the method of claim 1 and the apparatus of claim 4. Preferred embodiments are disclosed in the dependent claims.

In at least one implementation, an initial user interaction with a user interface to a local model of content is detected. The local model of the content comprises an initial portion of the content downloaded to the local model. A subsequent user interaction with the user interface to the local model of the content is predicted based at least in part on the initial user interaction. A subsequent portion of the content is then identified for downloading to the local model of the content in anticipation of the subsequent user interaction occurring. The subsequent portion is identified based at least in part on the subsequent user interaction.

This Overview is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 illustrates an operational scenario in an implementation.
Figure 2 illustrates a process that may be implemented by a content application or a content service in various scenarios.
Figure 3 illustrates an operational sequence in an implementation.
Figure 4 illustrates an operational sequence in an implementation.
Figure 5 illustrates an operational scenario in an implementation.
Figure 6 illustrates a process that may be implemented by a content application in various scenarios.
Figures 7-8 illustrate spreadsheets in their respective implementations.
Figure 9 illustrates a computing environment suitable for implementing any of the applications, services, processes, and operational scenarios disclosed herein with respect to Figures 1-8 and discussed below in the Technical Disclosure.

### TECHNICAL DISCLOSURE

Implementations disclosed herein enable enhanced user experiences with online content services and their hosted content. Content is hosted by the online content services such that users interact with it by way of content applications. Local models of the content are instantiated in the content applications and portions of the content are downloaded to the local models as needed so as to conserve bandwidth and other resources involved in provisioning the local models.

Which portions of the content are downloaded to the local models is driven dynamically based on how users interact with the content. In particular, user interactions are analyzed to predict what the next user interactions might be. Subsequent portions of the content corresponding to the predicted interactions are downloaded to the local models of the content ahead of the predicted interactions actually occurring. When (and if) the predicted actions occur, relevant portions of the content may already be loaded in the local models.

In an implementation, a process is employed for pre-loading data in local models of hosted content. The process may be employed in by a content application, a content service, or some combination of the two. The process detects an initial user interaction with a user interface to a local model of content. The local model includes an initial portion of the content downloaded to the local model. The process predicts what a subsequent user interaction with the user interface to the local model of the content might be based at least in part on the initial user interaction. A subsequent portion of the content is then identified based at least in part on what the subsequent user interaction was predicted to be, and may be downloaded to the local model of the content in anticipation of the subsequent user interaction possibly occurring.

The user interface to the local model of the content may include a content canvas in some scenarios. The content canvas may surface the initial portion of the content and the subsequent portion of the content. The user interface may also include a navigation control for navigating the content canvas. In such scenarios, the subsequent user interaction may be a selection of the navigation control and the initial user interaction may be a positioning interaction to position a pointer proximate to the navigation control.

In various implementations, the positioning interaction may be a movement of the pointer from an initial position over the content canvas to a subsequent position over the navigational control in preparation for selecting the navigational control. Examples of the navigational control include a scroll bar, a sheet tab, a notebook tab, a page bookmark, and a feature menu. Examples of the content include a spreadsheet document, a word processing document, a presentation document, and a note-taking document. The navigation control may be a scroll bar that has various directional elements for scrolling through the content in various directions. A selection of the navigational control may involve a selection of a one of the directional elements in order to scroll through the content in one of the directions corresponding to the directional elements.

In scenarios where the content is a spreadsheet, the spreadsheet may include various data blocks that each include cells. The initial portion of the content may be an initial data block of the data blocks. Accordingly, the subsequent portion of the content may be a subsequent data block of the data blocks.

The subsequent user interaction may be predicted in a variety of ways. In some implementations, interaction rules are identified for various users associated with the content, including a user associated with the user interaction. The interaction rules express how potential initial user interactions relate to potential subsequent user interactions. The subsequent user interaction may thus be identified based at least in part on how the initial user interaction relates to the potential subsequent user interactions.

A content service in some scenarios may be capable of collecting telemetry data on past user interactions with the content by various users. The content service may update the interaction rules based at least in part on an evaluation of the interaction rules in view of the telemetry data on the past user interactions.

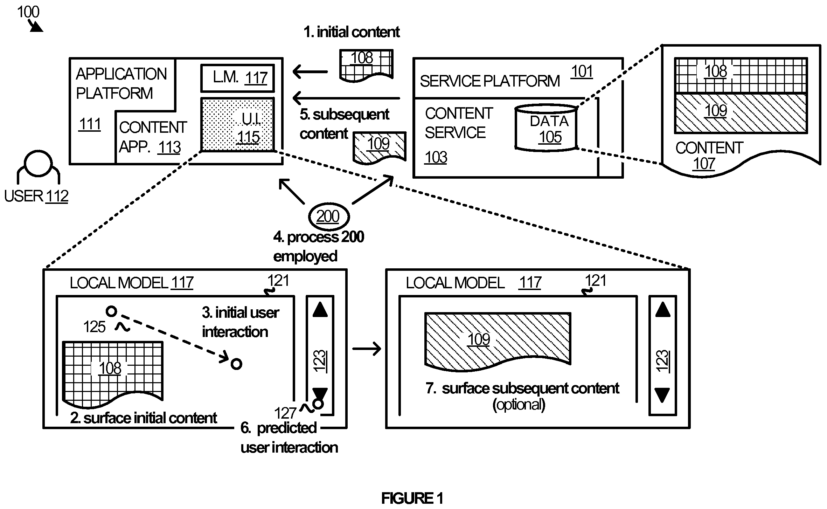

Figure 1 illustrates an operational scenario 100 that demonstrates various aspects of enhanced user experiences with content services. In operational scenario 100, service platform 101 hosts content service 103. Users engage with content service 103 by way of content applications on application platforms in order to access and interact with their data, represented by data 105. For exemplary purposes, operational scenario 100 includes application platform 111, on which content application 113 is deployed to provide user 112 with a user interface 115 to content service 103. User 112 can experience content 107 through user interface 115.

In operation, initial content 108 is downloaded from content service 103 to content application 113, to be loaded in a local model 117 of content 107. Content 107 may be defined in terms of portions or blocks, of which initial content 108 and subsequent content 109 are representative. The sub-division of content 107 into blocks may accommodate downloading the blocks to content application 113 iteratively, or as needed. Thus, initial content 108 is communicated for loading into local model 117 and rendering in user interface 115. It may be appreciated that the terms "initial" and "subsequent" are used with respect to initial content 108 and subsequent content 109 merely to distinguish them from each other and to denote that initial content 108 is downloaded ahead of subsequent content 109. However, it may be the case that other portions of content are downloaded ahead of initial content 108 and possibly before subsequent content 109, and thus the terms initial and subsequent are to be understood as relative terms and not absolutes.

A rendering of local model 117 is presented in user interface 115, which includes a content area 121 in which to surface initial content 108. Examples of content area 121 include canvases, preview panes, or other suitable visualization areas. User interface 115 also includes a navigation control 123 for navigating content area 121. Other navigation controls are possible in addition to or in place of navigation control 123 and may be considered within the scope of the present disclosure. In this scenario, initial user interaction 125 occurs, examples of which include moving a pointer or performing some other positioning interaction.

Other examples include interacting via key strokes, performing voice commands, inputting keyboard short cuts, having a mouse dwell over a link or a sheet tab selector, paging up or paging down, or selecting. While some of the interactions discussed herein relate to operations that might be performed with a mouse, it may be appreciated that user interactions may occur using any type of user input, including touch gestures, touch pad interactions, spoken commands, digital pen input, and the like.

At or near this point, pre-fetch process 200 is employed to enhance the responsiveness of the user experience with respect to content 107. Pre-fetch process 200 may be implemented by content application 113 (or some other application or module running on application platform 111) or in content service 103, or distributed across both. As such, pre-fetch process 200 is illustrated apart from both elements to represent that it could be employed one or the other, or both.

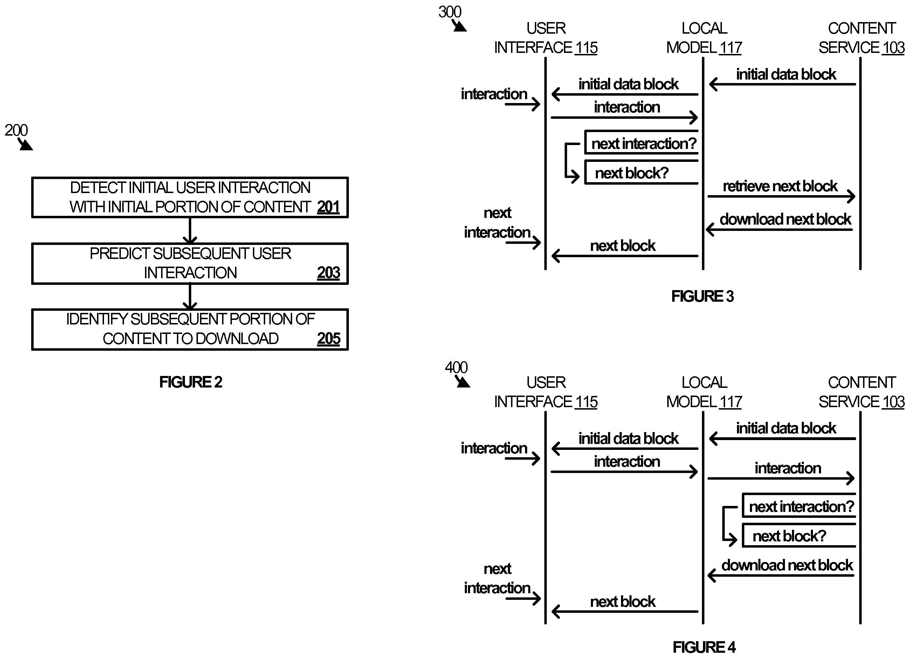

Pre-fetch process 200 is illustrated in detail in Figure 2 and the associated discussion proceeds with parenthetical reference to its steps. Pre-fetch process 200 monitors for and detects an initial user interaction with user interface 115 to local model 117 of content 107 (step 201), of which initial user interaction 125 is representative. Pre-fetch process 200 then predicts what a subsequent user interaction with user interface 115 might be based at least in part on initial user interaction 125 (step 203), represented by predicted user interaction 127.

Other factors may be considered when predicting the next interaction, such as the overall behavior of a user with user interface 115, other interactions that were made leading up to initial user interaction 125, a historical pattern of interactions, and the like. In another example, knowledge about which areas of content 107 have been the focus of other users (in a collaboration context, for instance) may be a factor considered when predicting the next user interaction. Still other factors are possible and may be considered within the scope of the present disclosure.

A subsequent portion of content 107 is identified based at least in part on what the subsequent user interaction was predicted to be (step 205), and may be downloaded to local model 117 of content 107 in anticipation of predicted user interaction possibly occurring. This makes subsequent portion 109 of content 107 available in local model 117 for rendering in user interface 115, should the predicted user interaction occur.

It is assumed for exemplary purposes that the predicted user interaction 127 does eventually occur, in response to which subsequent content 109 can be surfaced in content area 121 and viewed by user 112. Had some other subsequent user interaction occurred other than the predicted one, then other portions of content 107 might be retrieved, assuming the other interaction implicated some other portion of content 107.

Figure 3 illustrates an operational sequence 300 representative of the message and data flow that may occur when pre-fetch process 200 is implemented in content application 113. In this sequence, pre-fetch process 200 is implemented in local model 117, although it may be appreciated that pre-fetch process 200 could be implemented in some other manner associated with content application 113.

In operation, an initial data block is downloaded from content service 103 to local model 117. The initial data block is loaded in local model and surfaced in user interface 115. An initial user interaction may occur in user interface 115, in response to which the interaction is communicated to local model 117.

Local model 117 analyzes the initial user interaction to identify what next interaction may occur. Then, based on the next interaction that is identified, local model 117 identifies a next block to retrieve from content service 103.

The next block is downloaded from content service and is loaded in local model 117. At a later time, a next interaction may occur in user interface 115. The next interaction prompts the next block to be surfaced in user interface 115.

It may be appreciated from operational sequence 300 that the next block is downloaded from content service 103 and loaded in local model 117 prior to the next (or predicted) interaction occurring. In this manner, the data block is available for surfacing in user interface 115 when the next user interaction occurs. This avoids or mitigates sub-optimal user experiences that may occur when data is downloaded after a user interaction.

Figure 4 illustrates an operational sequence 400 representative of the message and data flow that may occur when pre-fetch process 200 is implemented in content service 103. In operation, an initial data block is downloaded from content service 103 to local model 117. The initial data block is loaded in local model 117 and surfaced in user interface 115. An initial user interaction may occur in user interface 115, in response to which information indicative of the interaction is communicated to content service 103.

Content service 103 analyzes the initial user interaction to identify what next interaction may occur. Then, based on the next interaction that is identified, content service 103 identifies a next block to download to local model 117.

The next block is downloaded from content service and is loaded in local model 117. At a later time, a next interaction may occur in user interface 115. The next interaction prompts the next block to be surfaced in user interface 115.

It may be appreciated from operational sequence 400 that the next block is downloaded from content service 103 and loaded in local model 117 prior to the next (or predicted) interaction occurring. In this manner, the data block is available for surfacing in user interface 115 when the next user interaction occurs, which may avoid or mitigate sub-optimal user experiences that may occur when data is downloaded after a user interaction.

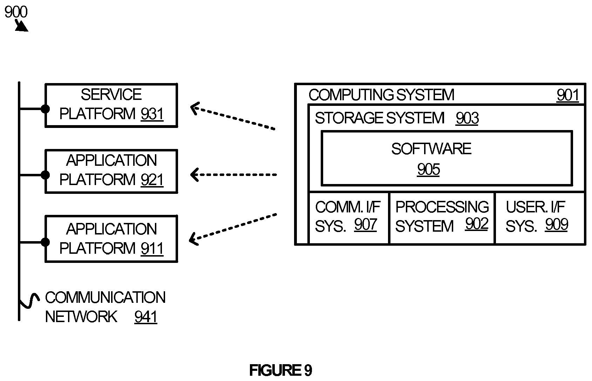

Referring back to Figure 1, service platform 101 is representative of any physical or virtual computing system, device, or collection thereof capable of hosting all or a portion of content service 103. In some scenarios, service platform 101 may employ pre-fetch process 200 in the context of content service 103. Examples of service platform 101 include, but are not limited to, server computers, web servers, application servers, rack servers, blade servers, virtual machine servers, or tower servers, as well as any other type of computing system, of which computing system 901 illustrated in Figure 9 is representative.

In some scenarios, content service 103 may be implemented in a data center, a virtual data center, or in some other suitable computing facility. Content service 103 may sometimes be referred to as a cloud service, an online service, an Internet service, or the like. Examples of content service 103 include, but are not limited to, office productivity services (including spreadsheet, word processing, and presentation services), email services, web hosting services, note taking services, gaming services, or any other type of service, variation, or combination thereof.

Application platform 111 is representative of any physical or virtual computing system, device, or collection thereof capable of running content application 113 and, in some scenarios may be capable of employing pre-fetch process 200. Examples of application platform include, but are not limited to, smart phones, laptop computers, tablet computers, desktop computers, hybrid computers, gaming machines, smart televisions, smart watches and other wearable devices, and virtual machines, as well as any variation or combination thereof, of which computing system 901 is representative.

Content application 113 is representative of any software application, module, component, or collection thereof, capable of communicating with content service 103 and rendering user interface 115 to surface local model 117 of content 107. Examples of content application 113 include, but are not limited to, spreadsheet applications, word processing applications, presentation applications, email applications, web browsers, note taking applications, or any other type of application, variation, or combination thereof. Examples of content 107 include, but are not limited to, spreadsheets, spreadsheet workbooks, word processing documents, presentation documents, note taking documents, gaming views, email application views, calendars, and any other type of content, variation, or combination thereof.

Content application 113 may be a locally installed and executed application, a streamed application, a mobile application, or any combination or variation thereof. In some implementations, content application 113 may be a browser-based application that executes in the context of a browser application. Content application 113 may be implemented as stand-alone application or may be distributed across multiple applications or sub-systems.

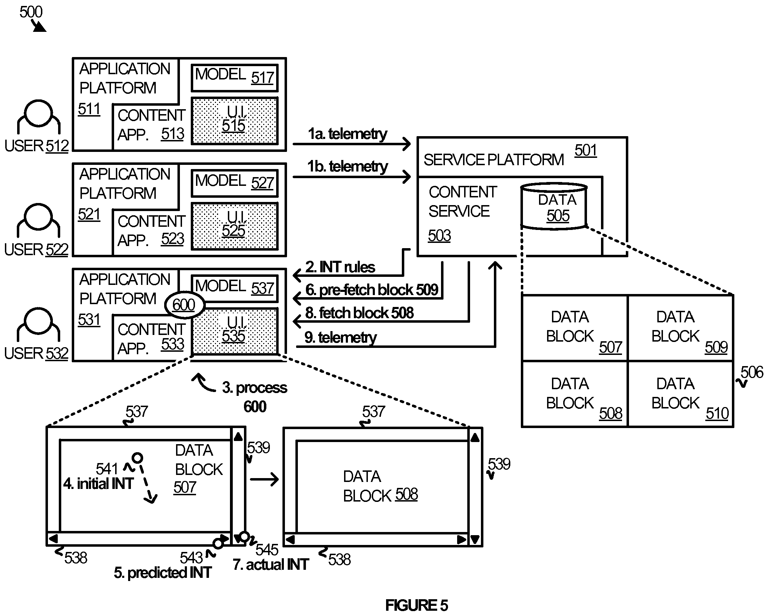

Figure 5 illustrates an operational scenario 500 that demonstrates more aspects of enhanced user experiences with content services. In operational scenario 500, service platform 501 hosts content service 503. Users engage with content service 503 by way of content applications on application platforms in order to access and interact with their data, represented by data 505. Included in data 505 is content 506, such as a spreadsheet, a word processing document, or a presentation that multiple users may collaborate on, and thus may be considered collaborative content in some scenarios. The multiple users are represented by user 512, user 522, and user 532.

Content 506 may be visualized as having various data blocks, of which data block 507, data block 508, data block 509, and data block 510 are representative. The arrangement of data blocks 507, 509, 508, and 510 are intended to represent how the data blocks are rendered visually in a presentation of content 506. For instance, a user may be able to view data block 507 in a display device, but cannot view any of the other data blocks unless the user navigates to them by way of various navigational tools that may be available in a user interface. Scrolling to the right from data block 507 would render data block 509, scrolling down from data block 507 would render data block 508, and so on.

User 512 engages with content service 503 by way of content application 513 on application platform 511. Content application 513 renders user interface 515 to content service 503 and includes model 517. Model 517 is a local model of content 506 that user 512 interacts with through user interface 515.

User 522 interfaces with content service 503 through content application 523 on application platform 521. Content application 523 renders user interface 525 to content service 503 and includes model 527. Model 527 is a local model of content 506 that user 522 interacts with through user interface 525.

User 532 interfaces with content service 503 through content application 533 on application platform 531. Content application 533 renders user interface 535 to content service 503 and includes model 537. Model 537 is a local model of content 506 that user 532 interacts with through user interface 535.

Content applications 513, 523, and 533 employ pre-fetch process 600 or a variation thereof to monitor for various user interaction, predict subsequent interactions, and pre-fetch blocks of data ahead of the predicted interactions. The predictions are made based partly on interaction rules that are provided to content applications 513, 523, and 533 by content service 503. Content service 503 may periodically update the rules in view of telemetry data that is collected from content applications 513, 523, and 533. The telemetry data may describe, among other things, how well past interaction rules have performed with respect to successfully predicting subsequent interactions by users.

Accordingly, in operational scenario 500, content application 513 and content application 523 communicate telemetry data to content service 503. Content application 533 may also provide telemetry data to content service 503. Content service 503 uses the telemetry data to generate, refine, or otherwise produce interaction rules, which it then communicates to content application 533. The content rules may also be communicated to content application 513 and content application 523. The interaction rules may be a new set of rules, an updated version of previously communicated rules, or some other variation of rules that content application 533 may apply in the context of pre-fetch process 600.

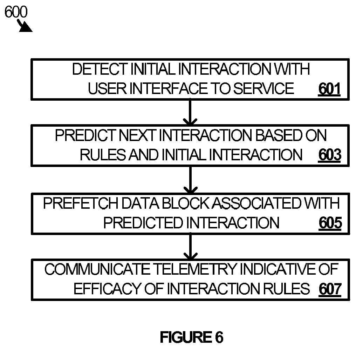

At or near this point, pre-fetch process 600 is employed to enhance the responsiveness of the user experience with respect to content 506. Pre-fetch process 600 may be implemented by any of content applications 513, 523, and 533, although for illustrative purposes it is described with respect to content application 533. In addition, pre-fetch process 600 could optionally be employed by content service 503 or distributed across both content service 503 and a content application. The following discussion of pre-fetch process 600 makes parenthetic reference to the steps illustrated in Figure 6, although it may be appreciated that other steps could occur.

Pre-fetch process 600 monitors for and detects an initial user interaction with user interface 535 to model 537 of content 506 (step 601), of which initial interaction 541 is representative. In this example, initial interaction 541 is a movement of a pointer from the top-middle portion of a canvas in which data block 507 is surfaced towards a lower-left portion of the canvas.

In response to detecting the initial user interaction, pre-fetch process 600 predicts what subsequent user interaction will occur next in view of the interaction rules (step 603). The interaction rules describe what subsequent user interactions are likely to occur next, following an initial user interaction. Thus, pre-fetch process 600 can interrogate the rules based on an identity or description of the initial user interaction to derive or predict a subsequent user interaction. In this example, the predicted interaction is represented by subsequent user interaction 543. Subsequent user interaction 543 is a selection of a directional element in navigational control 538. Navigational control 538 in this example is a horizontal scroll bar, and as such, the navigational element is a right arrow.

Selecting the right arrow would navigate user 532 to a view of content 506 associated with data block 509, in the event that the interaction occurs. Accordingly, pre-fetch process 600 pre-fetches data block 509 from content service 503 in anticipation of subsequent user interaction 543 occurring (step 605). In this manner, block 509 can be pre-loaded into model 537 such that it is available in the event that subsequent user interaction 543 occurs.

However, in this operational scenario, user 532 instead engages in a different user interaction that was not predicted by pre-fetch process 600. Rather than engaging in subsequent user interaction 543, user 532 engages in an actual user interaction, represented by subsequent user interaction 545. Subsequent user interaction 545 is a selection of a down arrow in navigational control 539. Selecting the down arrow navigates user 532 to a view of data block 508 instead of data block 509. Thus, data block 508 is fetched from content service 503 in response to subsequent user interaction 545.

The fact that user 532 engaged in subsequent user interaction 545 instead of subsequent user interaction 543 can be reported back to content service 503 in telemetry data (step 607). In the aggregate, content service 503 will receive telemetry data from many content applications indicative of large sample and wide range of user interactions with content. Content service 503 can modify interaction rules in view of the telemetry data in order to better predict user interactions and pre-fetch data with better accuracy.

In operational scenario 500, content 506 is illustrated as including four data blocks, although it may be appreciated that it could include additional data blocks. Moreover, the examples discussed above related to situations where a contiguous or adjacent data block is selected relative to the initial data block that is loaded in model 537. However, it may be the case that the next data block that is pre-fetched in association with a predicted user interaction is not adjacent to any block or blocks already loaded in model 537. Rather, a prediction user interaction may be associated with a data block that is located spatially or logically in content 506 such that it is not adjacent to the loaded block or blocks.

In a brief example, various data blocks associated with the top of a spreadsheet may be loaded in a local model of the spreadsheet. A user interaction may occur, in response to which a next user interaction is predicted. A data block associated with the predicted, next user interaction may be located far down in the sheet. In such a situation, the data block could be pre-fetched from a content service for loading in the local model ahead of the next user interaction occurring. The next user interaction might be, for example, a long scrolling operation that takes the user to a lower portion of the spreadsheet.

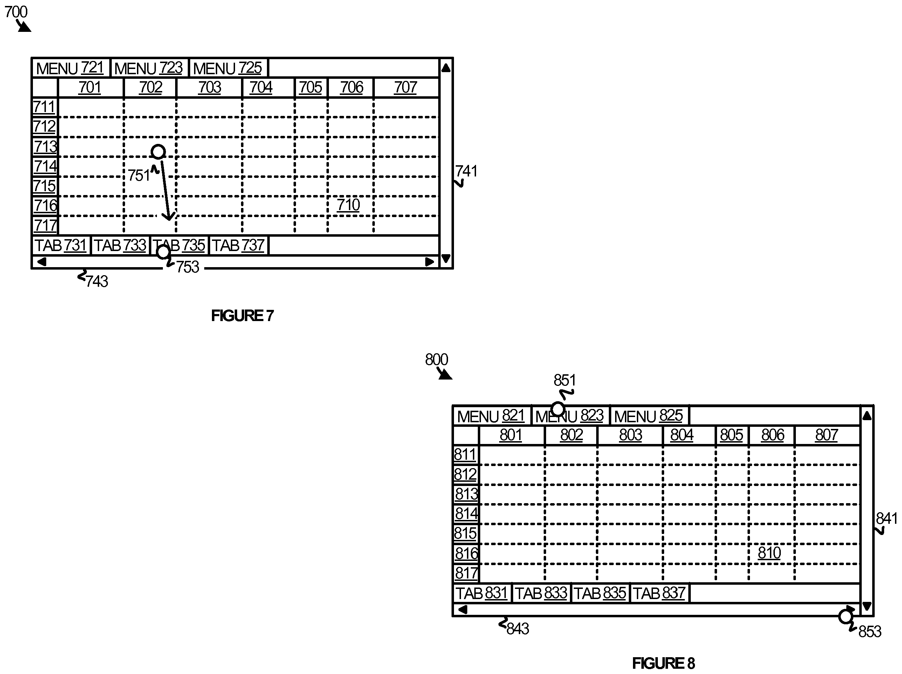

Figure 7 illustrates a workbook 700 in an example that highlights one type of user interaction that may be detected and from which a subsequent user interaction may be predicted. Workbook 700 includes cells defined by columns 701-707 and rows 711-717. Cell 710 is representative of each cell and is defined by column 706 and row 716.

Workbook 700 also includes feature menus represented by menu 721, menu 723, and menu 725 that allow a user to navigate to and select various operational features of the spreadsheet. Sheet tabs allow a user to navigate to different spreadsheets within the spreadsheet workbook and are represented by tab 731, tab 733, tab 735, and tab 737.

Horizontal scroll bar 743 allows a user to scroll horizontally within a spreadsheet, while vertical scroll bar 741 allows a user to scroll vertically within a spreadsheet. Other forms of navigation are also possible, such as by using key board commands to navigate or other types of user input.

Figure 7 includes an initial user interaction that is representative of one that may occur and from which a subsequent user interaction can be predicted. In this example, initial user interaction is merely a tracking movement 751 of a pointer from a cell defined by column 702 and row 713 towards tab 735. A background process (such as pre-fetch process 200 or pre-fetch process 600) can monitor user interactions in a user interface for tracking movements such as this. The tracking movement can be used to predict a subsequent user interaction.

Further in this example, the subsequent user interaction that may be predicted is represented by a selection 753 of tab 735. In other words, the background process may predict from the tracking movement 751 that a user intends on selecting tab 735 in order to navigate to a different spreadsheet within workbook 700. As such, the background process would pre-fetch a block of data associated with that spreadsheet ahead of the user actually making the selection of tab 735.

Figure 8 illustrates a workbook 800 in another example that highlights one type of user interaction that may be detected and from which a subsequent user interaction may be predicted. Workbook 800 includes cells defined by columns 801-807 and rows 811-817. Cell 810 is representative of each cell and is defined by column 806 and row 816.

Workbook 800 also includes feature menus represented by menu 821, menu 823, and menu 825 that allow a user to navigate to and select various operational features of the spreadsheet. Sheet tabs allow a user to navigate to different spreadsheets within the spreadsheet workbook and are represented by tab 831, tab 833, tab 835, and tab 837.

Horizontal scroll bar 843 allows a user to scroll horizontally within a spreadsheet, while vertical scroll bar 841 allows a user to scroll vertically within a spreadsheet. Other forms of navigation are also possible, such as by using key board commands to navigate or other types of user input.

Figure 8 includes an initial user interaction that is representative of one that may occur and from which a subsequent user interaction can be predicted. In this example, initial user interaction is merely a selection 851 of menu 823. A background process (such as pre-fetch process 200 or pre-fetch process 600) can monitor user interactions in a user interface for selections such as this. The selection 851 can be used to predict a subsequent user interaction.

Further in this example, the subsequent user interaction that may be predicted is represented by a selection 853 of a right arrow in horizontal scroll bar 843. In other words, the background process may predict from the selection 851 of menu 823 that a user intends on selecting the right arrow in horizontal scroll bar 843 next, possibly in order to navigate to a different area of the spreadsheet. As such, the background process would pre-fetch a block of data associated with that other portion of the spreadsheet ahead of the user actually making the selection 853 of the right arrow.

Figure 9 illustrates an operational environment 900 that is representative of an environment in which the various operational scenarios and processes disclosed herein may be implemented. Operational environment 900 includes application platform 911, application platform 921, and service platform 931.

Application platforms 911 and 921 are each representative of any computing apparatus, system, device, or collections thereof suitable for implementing a content application and optionally a pre-fetch process. Examples of application platforms 911 and 921 include, but are not limited to, smart phones, laptop computers, tablet computers, desktop computers, hybrid computers, gaming machines, virtual machines, smart televisions, and watches and other wearable devices, as well as any variation or combination thereof.

Service platform 931 is representative of any computing apparatus, system, or collections thereof capable of implementing all or portions of a content service and optionally a pre-fetch process. Examples of service platform 921 include server computers, rack servers, web servers, cloud computing platforms, and data center equipment, as well as any other type of physical or virtual server machine, and any variation or combination thereof. In some implementations, a collection of multiple computing systems may be employed to implement all or portions of a content service which may be hosted in one or more data centers, virtual data centers, or any other suitable computing facilities.

Computing system 901 is an example of application platform 911, application platform 921, and service platform 931. Computing system 901 may be implemented as a single apparatus, system, or device or may be implemented in a distributed manner as multiple apparatuses, systems, or devices. Computing system 901 includes, but is not limited to, processing system 902, storage system 903, software 905, communication interface system 907, and user interface system 909. Processing system 902 is operatively coupled with storage system 903, communication interface system 907, and user interface system 909.

Processing system 902 loads and executes software 905 from storage system 903. When executed by processing system 902 to enhance the user experience with content services, software 905 directs processing system 902 to operate as described herein for the various processes, operational scenarios, and sequences discussed in the foregoing implementations. Computing system 901 may optionally include additional devices, features, or functionality not discussed for purposes of brevity.

Referring still to Figure 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 may be implemented in program instructions and among other functions may, when executed by processing system 902, direct processing system 902 to operate as described with respect to the various operational scenarios, sequences, and processes illustrated herein. When computing system 901 is deployed as an application platform (e.g. application platforms 111, 511, 521, and 531), software 905 may include program instructions for implementing a content application and its associated functionality, such as content applications 113, 513, 523, and 533, as well as pre-fetch process 200 and pre-fetch process 600. When computing system 901 is deployed as a service platform (e.g. service platforms 101 and 501), software 905 may include program instructions for implementing a content service and its associated functionality, such as content services 103 and 503, as well as pre-fetch process 200 and pre-fetch process 600.

In particular, the program instructions may include various components or modules that cooperate or otherwise interact to carry out the various processes and operational scenarios described herein. The various components or modules may be embodied in compiled or interpreted instructions or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software or other application software. Software 905 may also comprise firmware or some other form of machine-readable processing instructions executable by processing system 902.

In general, software 905 may, when loaded into processing system 902 and executed, transform a suitable apparatus, system, or device (of which computing system 901 is representative) overall from a general-purpose computing system into a special-purpose computing system customized to facilitate enhanced user experiences with content services. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Referring again to Figure 1 as an example, through the operation of a computing system or systems of which computing system 901 is representative, transformations may be performed with respect to content application 113 in general, and local model 117 in particular. As an example, an initial user interaction occurs, in response to which a subsequent user interaction is predicted. Subsequent portions of content associated with the predicted interaction are downloaded from content service 103 and loaded in local model 117, thereby transforming the state of local model 117. A similar transformation occurs with respect to model 537 illustrated in Figure 5.

It may be understood that computing system 901 is generally intended to represent a computing system or systems on which software 905 may be deployed and executed in order to implement enhanced user experiences with content services. However, computing system 901 may also be suitable as any computing system on which software 905 may be staged and from where one or both may be distributed, transported, downloaded, or otherwise provided to yet another computing system for deployment and execution, or yet additional distribution.

Communication interface system 907 may include communication connections and devices that allow for communication with other computing systems (not shown) over communication network 941. Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

User interface system 909 is optional and may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 909. In some cases, the input and output devices may be combined in a single device, such as a display capable of displaying images and receiving touch gestures. The aforementioned user input and output devices are well known in the art and need not be discussed at length here.

User interface system 909 may also include associated user interface software executable by processing system 902 in support of the various user input and output devices discussed above. Separately or in conjunction with each other and other hardware and software elements, the user interface software and user interface devices may support a graphical user interface, a natural user interface, or any other type of user interface. For example, user interface 115, user interface 515, user interface 525, and user interface 535 may be presented through user interface system 909. In addition, user input made with respect to the user interfaces can be input via user interface system 909.

Communication between application platform 911, application platform 921, and service platform 931 and any other computing system occurs over communication network 941 or other networks and in accordance with various communication protocols, combinations of protocols, or variations thereof. Examples of communication network 941 include intranets, internets, the Internet, local area networks, wide area networks, wireless networks, wired networks, virtual networks, software defined networks, data center buses, computing backplanes, or any other type of network, combination of network, or variation thereof. The aforementioned communication networks and protocols are well known and need not be discussed at length here. However, some communication protocols that may be used include, but are not limited to, the Internet protocol (IP, IPv4, IPv6, etc.), the transfer control protocol (TCP), and the user datagram protocol (UDP), as well as any other suitable communication protocol, variation, or combination thereof.

In any of the aforementioned examples in which data, content, or any other type of information is exchanged, the exchange of information may occur in accordance with any of a variety of protocols, including FTP (file transfer protocol), HTTP (hypertext transfer protocol), REST (representational state transfer), WebSocket, DOM (Document Object Model), HTML (hypertext markup language), CSS (cascading style sheets), HTML5, XML (extensible markup language), JavaScript, JSON (JavaScript Object Notation), and AJAX (Asynchronous JavaScript and XML), as well as any other suitable protocol, variation, or combination thereof.

While Figures 1-9 generally depict relatively few users and relatively few instances of service platforms, content services, application platforms, and content applications, it may be appreciated that the concepts disclosed herein may be applied at scale. For example, the content applications and services disclosed herein could be deployed in support of any number of users.

The functional block diagrams, operational scenarios and sequences, and flow diagrams provided in the Figures are representative of exemplary systems, environments, and methodologies for performing novel aspects of the disclosure. While, for purposes of simplicity of explanation, methods included herein may be in the form of a functional diagram, operational scenario or sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The descriptions and figures included herein depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations.

## Claims

1. A method for loading data in local models (117, 517, 527, 537) of a hosted spreadsheet document, the spreadsheet document being hosted by an online content service (103, 503), such that users may interact with the spreadsheet document by way of content applications (113, 513, 523, 533), the local models being instantiated in the content applications (113, 513, 523, 533), the method comprising:
downloading an initial portion of the spreadsheet document from the online content service (103, 503) to a content application (113, 513, 523, 533), the initial spreadsheet document to be loaded into a local model (117, 517, 527, 537);
loading the initial portion of the spreadsheet document into the local model (117, 517, 527, 537) and rendering the initial portion of the spreadsheet document in a user interface (115, 515, 525, 535);
detecting (201) an initial user interaction with the user interface (115, 515, 525, 535) to the local model of the spreadsheet document comprising the initial portion of the spreadsheet document downloaded to the local model (117, 517, 527, 537), wherein the initial user interaction is a positioning interaction to position a pointer proximate to a scroll bar (741, 743, 841, 843) included by the user interface (115, 515, 525, 535);
predicting (203) what subsequent user interaction with the user interface (115, 515, 525, 535) to the local model (117, 517, 527, 537) of the spreadsheet document will occur next based at least in part on interaction rules, the interaction rules describing what subsequent user interactions are likely to occur next, following the initial user interaction, wherein the subsequent user interaction is a selection of a directional element in the scroll bar (741, 743, 841, 843);
identifying (205), based at least in part on what the subsequent user interaction was predicted to be, a subsequent portion (109) of the spreadsheet document (107) to download to the local model (117, 517, 527, 537) of the spreadsheet document in anticipation of the subsequent user interaction occurring;
downloading from the online content service the subsequent portion of the spreadsheet document to the local model (117, 517, 527, 537) of the content ahead of the subsequent user interaction occurring, making the subsequent portion of the spreadsheet document available in the local model for rendering in the user interface, should the predicted user interaction occur; and
in response to the subsequent user interaction occurring, surfacing the subsequent portion (109) of the spreadsheet document (107) in a content area (121) of the user interface (115, 515, 525, 535),
wherein the user interface (115, 515, 525, 535) to the local model (117, 517, 527, 537) of the spreadsheet document comprises a content canvas, in which to surface the initial portion of the spreadsheet document and the subsequent portion of the spreadsheet document, and the scroll bar (741, 743, 841, 843) for navigating the content canvas, wherein the positioning interaction comprises a movement of the pointer from an initial position over the content canvas to a subsequent position over the scroll bar in preparation for selecting the directional element of the scroll bar.

2. The method of claim 1 wherein predicting the subsequent user interaction with the user interface (115, 515, 525, 535) to the local model (117, 517, 527, 537) of the spreadsheet document based at least in part on the initial user interaction comprises:
identifying the interaction rules for a plurality of users associated with the spreadsheet document, including a user associated with the initial user interaction, that express at least how potential initial user interactions relate to potential subsequent user interactions; and
identifying the subsequent user interaction based at least in part on how the initial user interaction relates to the potential subsequent user interactions.

3. The method of claim 2 further comprising collecting telemetry data on past user interactions with the spreadsheet document by the plurality of users and updating the interaction rules based at least in part on an evaluation of the interaction rules in view of the telemetry data on the past user interactions, and wherein the spreadsheet document comprises a spreadsheet, wherein the spreadsheet comprises a plurality of data blocks, wherein each of the plurality of data blocks comprises a plurality of cells, and wherein the initial portion of the content comprises an initial data block of the plurality of data blocks and the subsequent portion of the content comprises a subsequent data block of the plurality of data blocks.

4. An apparatus (901) comprising:
one or more computer readable storage media; and
program instructions stored on the one or more computer readable storage media that, when executed by a processing system (902), direct the processing system (902) to at least:
detect an initial user interaction with a user interface (115, 515, 525, 535) to a local model (117, 517, 527, 537) of a spreadsheet document, wherein the spreadsheet document is hosted by a content service (103, 503) and comprises a plurality of data blocks, and wherein the local model comprises an initial data block of the plurality of data blocks previously downloaded from the content service (103, 503) to the local model (117, 517, 527, 537), wherein the initial user interaction is a positioning interaction to position a pointer proximate to a scroll bar (741, 743, 841, 843) included by the user interface (115, 515, 525, 535);
predict what subsequent user interaction with the user interface (115, 515, 525, 535) to the local model (117, 517, 527, 537) of the spreadsheet document will occur based at least in part on interaction rules, the interaction rules describing what subsequent user interactions are likely to occur next, following the initial user interaction, wherein the subsequent user interaction is a selection of a directional element in the scroll bar (741, 743, 841, 843);
identify, based at least in part on what the subsequent user interaction was predicted to be, a subsequent data block of the plurality of data blocks to download to the local model (117, 517, 527, 537) of the spreadsheet document in anticipation of the subsequent user interaction occurring;
download rom the content service the subsequent portion of the spreadsheet document to the local model (117, 517, 527, 537) of the spreadsheet document ahead of the subsequent user interaction occurring, making the subsequent portion of the spreadsheet document available in the local model (117, 517, 527, 537) for rendering in the user interface (115, 515, 525, 535), should the predicted user interaction occur; and
in response to the predicted user interaction occurring, surfacing the subsequent portion of the spreadsheet document in a content area (121) of the user interface (115, 515, 525, 535),
wherein the user interface (115, 515, 525, 535) to the local model (117, 517, 527, 537) of the spreadsheet document comprises a content canvas, in which to surface at least the initial data block and the subsequent data block, and the scroll bar (741, 743, 841, 843) for navigating the content canvas,
wherein the positioning interaction comprises a movement of the pointer from an initial position over the content canvas to a subsequent position over the scroll bar in preparation for selecting the the directional element in the scroll bar.

5. The apparatus of claim 4 further comprising:
the processing system that executes the program instructions and a user interface system that displays the user interface (115, 515, 525, 535), wherein the spreadsheet document comprises a spreadsheet, wherein the spreadsheet comprises the plurality of data blocks, wherein each of the plurality of data blocks comprises a plurality of cells.

## Patentansprüche

1. Ein Verfahren zum Laden von Daten in lokalen Modellen (117, 517, 527, 537) eines gehosteten Tabellendokuments, wobei das Tabellendokument durch einen Online-Inhaltsdienst (103, 503) gehostet ist, so dass Benutzer mit dem Tabellendokument durch Inhaltsanwendungen (113, 513, 523, 533) interagieren können, wobei die lokalen Modelle in den Inhaltsanwendungen (113, 513, 523, 533) initiiert werden, wobei das Verfahren umfasst:
Herunterladen eines anfänglichen Anteils des Tabellendokuments von dem Online-Inhaltsdienst (103, 503) zu einer Inhaltsanwendung (113, 513, 523, 533), wobei das anfängliche Tabellendokument in ein lokales Modell (117, 517, 527, 537) geladen werden soll;
Laden des anfänglichen Anteils des Tabellendokuments in das lokale Modell (117, 517, 527, 537) und Widergeben des anfänglichen Anteils des Tabellendokuments in einer Benutzerschnittstelle (115, 515, 525, 535);
Ermitteln (201) einer anfänglichen Benutzerinteraktion mit der Benutzerschnittstelle (115, 515, 525, 535) zu dem lokalen Modell des Tabellendokuments, das den anfänglichen Anteil des Tabellendokuments umfasst, das in das lokale Modell (117, 517, 527, 537) heruntergeladen wurde, wobei die anfängliche Benutzerinteraktion eine Positionierungsinteraktion ist zum Positionieren eines Anzeigers in der Nähe eines Scroll-Balkens (741, 743, 841, 843), der von der Benutzerschnittstelle (115, 515, 525, 535) umfasst wird;
Vorhersagen (203), welche nachfolgende Benutzerinteraktion mit der Benutzerschnittstelle (115, 515, 525, 535) zu dem lokalen Modell (117, 517, 527, 537) des Tabellendokuments als nächstes eintreten wird basierend zumindest teilweise auf Interaktionsregeln, wobei die Interaktionsregeln beschreiben, welche nachfolgende Benutzerinteraktionen wahrscheinlich der anfänglichen Benutzerinteraktion folgend als nächstes eintreten werden, wobei die nachfolgende Benutzerinteraktion eine Auswahl eines richtungsabhängigen Elements in dem Scroll-Balken (741, 743, 841, 843) ist;
Identifizieren (205), basierend zumindest teilweise darauf, was als nachfolgende Benutzerinteraktion vorhergesagt wurde, eines nachfolgenden Anteils (109) des Tabellendokuments (107) zum Herunterladen zu dem lokalen Modell (117, 517, 527, 537) des Tabellendokuments unter der Annahme, dass die nachfolgende Benutzerinteraktion eintritt;
Herunterladen des nachfolgenden Anteils des Tabellendokuments von dem Online-Inhaltsdienst zu dem lokalen Modell (117, 517, 527, 537) des Inhalts bevor die nachfolgende Benutzerinteraktion eintritt, Bereitstellen des nachfolgenden Anteils des Tabellendokuments in dem lokalen Modell zum Darstellen in der Benutzerschnittstelle, sollte die vorhergesagte Benutzerinteraktion eintreten; und
in Antwort auf das Eintreten der nachfolgenden Benutzerinteraktion, zum Vorschein kommen lassen des nachfolgenden Anteils (109) des Tabellendokuments (107) in einem Inhaltsbereich (121) der Benutzerschnittstelle (115, 515, 525, 535),
wobei die Benutzerschnittstelle (115, 515, 525, 535) zu dem lokalen Modell (117, 517, 527, 537) des Tabellendokuments eine Inhaltsleinwand umfasst, auf der der anfängliche Anteil des Tabellendokuments und der nachfolgenden Anteil des Tabellendokuments zum Vorschein gebracht werden soll, und den Scroll-Balken (741, 743, 841, 843) zum Navigieren der Inhaltsleinwand, wobei die Positionierungsinteraktion eine Bewegung des Anzeigers von einer anfänglichen Position über die Inhaltsleinwand zu einer nachfolgenden Position über den Scroll-Balken umfasst in Vorbereitung zum Auswählen des richtungsabhängigen Elements des Scroll-Balkens.

2. Das Verfahren nach Anspruch 1, wobei das Vorhersagen der nachfolgenden Benutzerinteraktion mit der Benutzerschnittstelle (115, 515, 525, 535) zu dem lokalen Modell (117, 517, 527, 537) des Tabellendokuments basierend zumindest teilweise auf der anfänglichen Benutzerinteraktion umfasst:
Identifizieren der Interaktionsregeln für eine Vielzahl von Benutzern, die mit dem Tabellendokument assoziiert sind, umfassend einen Benutzer, der mit der anfänglichen Benutzerinteraktion assoziiert ist, die zumindest ausdrücken, wie potentielle anfängliche Benutzerinteraktionen mit potentiellen nachfolgenden Benutzerinteraktionen zusammenhängen; und
Identifizieren der nachfolgenden Benutzerinteraktion basierend zumindest teilweise darauf, wie die anfängliche Benutzerinteraktion mit den potentiellen nachfolgenden Benutzerinteraktionen zusammenhängt.

3. Das Verfahren nach Anspruch 2, weiter umfassend Sammeln von telemetrischen Daten vergangener Benutzerinteraktionen durch die Vielzahl von Benutzer mit dem Tabellendokument und Aktualisieren der Interaktionsregeln basierend zumindest teilweise auf einer Evaluierung der Interaktionsregeln hinsichtlich der telemetrischen Daten vergangener Benutzerinteraktionen, und wobei das Tabellendokument eine Tabelle umfasst, wobei die Tabelle eine Vielzahl von Datenblöcken umfasst, wobei jeder der Vielzahl von Datenblöcken eine Vielzahl von Zellen umfasst, und wobei der anfängliche Anteil des Inhalts einen anfänglichen Datenblock der Vielzahl von Datenblöcken umfasst und der nachfolgenden Anteil des Inhalts einen nachfolgenden Datenblock der Vielzahl von Datenblöcken umfasst.

4. Eine Vorrichtung (901) umfassend:
ein oder mehrere computerlesbare Speichermedien; und
Programminstruktionen, die auf dem einen oder den mehreren computerlesbare Speichermedien gespeichert sind, die, wenn sie durch eine Prozessorvorrichtung (902) ausgeführt werden, die Prozessorvorrichtung (902) zumindest dazu veranlassen:
Detektieren einer anfänglichen Benutzerinteraktion mit einer Benutzerschnittstelle (115, 515, 525, 535) zu einem lokalen Modell (117, 517, 527, 537) eines Tabellendokuments, wobei das Tabellendokument von einem Inhaltsdienst (103, 503) gehostet ist und eine Vielzahl von Datenblöcken umfasst, und wobei das lokale Modell einen anfänglichen Datenblock der Vielzahl von Datenblöcken umfasst, die zuvor von dem Inhaltsdienst (103, 503) zu dem lokalen Modell (117, 517, 527, 537) heruntergeladen wurden, wobei die anfängliche Benutzerinteraktion eine Positionierungsinteraktion zum Positionieren eines Anzeigers in der Nähe eines Scroll-Balkens (741, 743, 841, 843) ist, der von der Benutzerschnittstelle (115, 515, 525, 535) umfasst ist;
Vorhersagen, welche nachfolgende Benutzerinteraktion mit der Benutzerschnittstelle (115, 515, 525, 535) zu dem lokalen Modell (117, 517, 527, 537) des Tabellendokuments eintreten wird basierend zumindest teilweise auf Interaktionsregeln, wobei die Interaktionsregeln beschreiben, welche nachfolgende Benutzerinteraktionen wahrscheinlich der anfänglichen Benutzerinteraktion folgend als nächstes eintreten werden, wobei die nachfolgende Benutzerinteraktion eine Auswahl eines richtungsabhängigen Elements in dem Scroll-Balken (741, 743, 841, 843) ist;
Identifizieren, basierend zumindest teilweise darauf, welche nachfolgende Benutzerinteraktion vorhergesagt wurde, eines nachfolgenden Datenblocks der Vielzahl von Datenblöcken zum Herunterladen zu dem lokalen Modell (117, 517, 527, 537) des Tabellendokuments unter der Annahme, dass die nachfolgende Benutzerinteraktion eintritt;
Herunterladen des nachfolgenden Anteils des Tabellendokuments von dem Online-Inhaltsdienst zu dem lokalen Modell (117, 517, 527, 537) des Tabellendokuments bevor die nachfolgende Benutzerinteraktion eintritt, Bereitstellen des nachfolgenden Anteils des Tabellendokuments in dem lokalen Modell (117, 517, 527, 537) zum Darstellen in der Benutzerschnittstelle (115, 515, 525, 535), sollte die vorhergesagte Benutzerinteraktion eintreten; und
in Antwort auf das Eintreten der vorhergesagten Benutzerinteraktion, zum Vorschein kommen lassen des nachfolgenden Anteils des Tabellendokuments in einem Inhaltsbereich (121) der Benutzerschnittstelle (115, 515, 525, 535),
wobei die Benutzerschnittstelle (115, 515, 525, 535) zu dem lokalen Modell (117, 517, 527, 537) des Tabellendokuments eine Inhaltsleinwand umfasst, auf der der anfängliche Datenblock und der nachfolgende Datenblock zum Vorschein gebracht werden soll, und der Scroll-Balken (741, 743, 841, 843) zum Navigieren der Inhaltsleinwand,
wobei die Positionierungsinteraktion eine Bewegung des Anzeigers von einer anfänglichen Position über die Inhaltsleinwand zu einer nachfolgenden Position über den Scroll-Balken umfasst in Vorbereitung zum Auswählen des richtungsabhängigen Elements des Scroll-Balkens.

5. Die Vorrichtung nach Anspruch 4, weiter umfassend:
die Prozessorvorrichtung, die die Programminstruktionen ausführt und eine Benutzerschnittstellenvorrichtung, die die Benutzerschnittstelle (115, 515, 525, 535) darstellt, wobei das Tabellendokument eine Tabelle umfasst, wobei die Tabelle die Vielzahl von Datenblöcken umfasst, wobei jeder der Vielzahl von Datenblöcken eine Vielzahl von Zellen umfasst.

## Revendications

1. Procédé de chargement des données dans les modèles locaux (117, 517, 527, 537) d'un document tableur, le document tableur étant hébergé par un service de contenu en ligne (103, 503), de sorte que les utilisateurs peuvent interagir avec le document tableur au moyen d'applications de contenu (113, 513, 523, 533), les modèles locaux étant instanciés dans les applications de contenu (113, 513, 523, 533), le procédé comprenant:
le téléchargement d'une partie initiale du document de tableur du service de contenu en ligne (103, 503) vers une application de contenu (113, 513, 523, 533), le document de tableur initial devant être chargé dans un modèle local (117, 517, 527, 537);
le chargement de la partie initiale du document de tableur dans le modèle local (117, 517, 527, 537) et le rendu de la partie initiale du document de tableur dans une interface utilisateur (115, 515, 525, 535);
la détection (201) d'une interaction initiale de l'utilisateur avec l'interface utilisateur (115, 515, 525, 535) au modèle local du document de feuille de calcul comprenant la partie initiale du document de feuille de calcul téléchargé au modèle local (117, 517, 527, 537), dans lequel l'interaction initiale de l'utilisateur est une interaction de positionnement pour positionner un pointeur à proximité d'une barre de défilement (741, 743, 841, 843) incluse par l'interface utilisateur (115, 515, 525, 535) ;
la prédiction (203) de l'interaction utilisateur ultérieure avec l'interface utilisateur (115, 515, 525, 535) au modèle local (117, 517, 527, 537) du document de tableur se produira ensuite en se basant au moins en partie sur les règles d'interaction, les règles d'interaction décrivant quelles interactions utilisateur ultérieures sont susceptibles de se produire ensuite, après l'interaction utilisateur initiale, dans laquelle l'interaction utilisateur ultérieure est une sélection d'un élément directionnel dans la barre de défilement (741, 743, 841, 843);
l'identification(205), sur la base au moins en partie de l'interaction ultérieure de l'utilisateur, d'une partie ultérieure (109) du document tableur (107) à télécharger dans le modèle local (117, 517, 527, 537) du document tableur en prévision de l'interaction ultérieure de l'utilisateur;
le téléchargement du service de contenu en ligne de la partie suivante du document de tableur vers le modèle local (117, 517, 527, 537) du contenu avant que l'interaction ultérieure de l'utilisateur ne se produise, rendant la partie suivante du document de tableur disponible dans le modèle local pour le rendu dans l'interface utilisateur, si l'interaction prévue de l'utilisateur se produit; et
en réponse à l'interaction ultérieure de l'utilisateur, la présentation de la partie suivante (109) du document de tableur (107) dans une zone de contenu (121) de l'interface utilisateur (115, 515, 525, 535),
dans lequel l'interface utilisateur (115, 515, 525, 535) avec le modèle local (117, 517, 527, 537) du document de tableur comprend un canevas de contenu, dans lequel font surface la partie initiale du document de tableur et la partie suivante du document de tableur, et la barre de défilement (741, 743, 841, 843) pour naviguer dans le canevas de contenu, dans lequel l'interaction de positionnement comprend un mouvement du pointeur d'une position initiale sur le canevas de contenu à une position ultérieure sur la barre de défilement en préparation de la sélection de l'élément directionnel de la barre de défilement.

2. Procédé selon la revendication 1 dans lequel la prévision de l'interaction ultérieure de l'utilisateur avec l'interface utilisateur (115, 515, 525, 535) au modèle local (117, 517, 527, 537) du document de tableur fondé au moins en partie sur l'interaction initiale de l'utilisateur comprend:
l'identification des règles d'interaction pour une pluralité d'utilisateurs associés au document de tableur, y compris un utilisateur associé à l'interaction initiale de l'utilisateur, qui expriment au moins la manière dont les interactions initiales potentielles de l'utilisateur sont liées aux interactions ultérieures potentielles de l'utilisateur; et
l'identification de l'interaction ultérieure de l'utilisateur, fondée au moins en partie sur la manière dont l'interaction initiale de l'utilisateur est liée aux interactions ultérieures potentielles de l'utilisateur.

3. Procédé selon la revendication 2 comprenant en outre la collecte de données de télémétrie sur les interactions passées des utilisateurs avec le document de tableur par la pluralité d'utilisateurs et la mise à jour des règles d'interaction basée au moins en partie sur une évaluation des règles d'interaction au vu des données de télémétrie sur les interactions passées des utilisateurs, et dans lequel le document de tableur comprend une feuille de calcul, dans lequel la feuille de calcul comprend une pluralité de blocs de données, dans lequel chacun de la pluralité de blocs de données comprend une pluralité de cellules, et dans lequel la partie initiale du contenu comprend un bloc de données initial de la pluralité de blocs de données et la partie suivante du contenu comprend un bloc de données suivant de la pluralité de blocs de données.

4. Appareil (901) comprenant:
un ou plusieurs supports de stockage lisibles par ordinateur; et
des instructions de programme stockées sur un ou plusieurs supports de stockage lisibles par ordinateur qui, lorsqu'elles sont exécutées par un système de traitement (902), dirigent le système de traitement (902) pour au moins:
détecter une première interaction de l'utilisateur avec une interface utilisateur (115, 515, 525, 535) vers un modèle local (117, 517, 527, 537) d'un document de tableur, dans lequel le document de tableur est hébergé par un service de contenu (103, 503) et comprend une pluralité de blocs de données, et dans lequel le modèle local comprend un bloc de données initial parmi la pluralité de blocs de données précédemment téléchargés du service de contenu (103, 503) vers le modèle local (117, 517, 527, 537), dans lequel l'interaction initiale de l'utilisateur est une interaction de positionnement pour positionner un pointeur à proximité d'une barre de défilement (741, 743, 841, 843) incluse par l'interface utilisateur (115, 515, 525, 535);
prévoir quelle interaction utilisateur ultérieure avec l'interface utilisateur (115, 515, 525, 535) au modèle local (117, 517, 527, 537) du document de feuille de calcul se produira en se basant au moins en partie sur les règles d'interaction, les règles d'interaction décrivant quelles interactions utilisateur ultérieures sont susceptibles de se produire ensuite, après l'interaction utilisateur initiale, dans laquelle l'interaction utilisateur ultérieure est une sélection d'un élément directionnel dans la barre de défilement (741, 743, 841, 843);
identifier, en se fondant au moins en partie sur ce que l'interaction ultérieure de l'utilisateur était prévue, un bloc de données ultérieur parmi la pluralité de blocs de données à télécharger dans le modèle local (117, 517, 527, 537) du document de tableur en prévision de l'interaction ultérieure de l'utilisateur;
télécharger du service de contenu la partie suivante du document de la feuille de calcul vers le modèle local (117, 517, 527, 537) du document de la feuille de calcul avant que l'interaction ultérieure de l'utilisateur ne se produise, rendant la partie suivante du document de la feuille de calcul disponible dans le modèle local (117, 517, 527, 537) pour le rendu dans l'interface utilisateur (115, 515, 525, 535), si l'interaction prévue de l'utilisateur se produit; et
en réponse à l'interaction prévue de l'utilisateur, présenter la partie suivante du document de tableur dans une zone de contenu (121) de l'interface utilisateur (115, 515, 525, 535),
dans lequel l'interface utilisateur (115, 515, 525, 535) avec le modèle local (117, 517, 527, 537) du document de tableur comprend un canevas de contenu, dans lequel font surface au moins le bloc de données initial et le bloc de données suivant, et la barre de défilement (741, 743, 841, 843) pour naviguer dans le canevas de contenu,
dans lequel l'interaction de positionnement comprend un mouvement du pointeur d'une position initiale sur la toile de fond à une position ultérieure sur la barre de défilement en préparation de la sélection de l'élément directionnel dans la barre de défilement.

5. Appareil selon la revendication 4 comprenant en outre:
le système de traitement qui exécute les instructions du programme et un système d'interface utilisateur qui affiche l'interface utilisateur (115, 515, 525, 535), dans lequel le document de feuille de calcul comprend une feuille de calcul, dans lequel la feuille de calcul comprend la pluralité de blocs de données, dans lequel chacun de la pluralité de blocs de données comprend une pluralité de cellules.
